# EUROPEAN PATENT APPLICATION

(11) **EP 4 353 501 A1**
(43) Date of publication of application: **17.04.2024**
(21) Application number: 22200934.2
(22) Date of filing: 11.10.2022
(51) Int. Cl.: B60G 11/04, B60G 11/10, B60G 11/107, B60G 11/12

(54) **AXLE ALIGNMENT ARRANGEMENT**

(71) Applicant: VOLVO TRUCK CORPORATION, 405 08 Göteborg (SE)
(72) Inventor: KRISHNA, Satheesha, 560075 Bengaluru (IN); NALAWADE, Dinkar, 560043 Bengaluru (IN)
(74) Representative: Zacco Sweden AB

(57) **Abstract**

An axle alignment arrangement (102) connectable to an eyelet (118) at a peripheral end (112) of a leaf spring suspension (110). The axle alignment arrangement (102) comprising: a locking mechanism (116) to be placed in the eyelet (118) of the leaf spring suspension (110) for preventing movement of the leaf spring suspension (110) along a frame central axis (106) of a vehicle (100), the locking mechanism (116) configured to be in a locked (124) or an unlocked (126) state; a frame connector (120) configured to be fixed to the frame (104), the frame connector (120) having a slot hole (122) longitudinally elongated along the frame central axis (106), the slot hole (122) configured to receive the locking mechanism (116). In the unlocked state (126), the leaf spring suspension (110) is movable longitudinally with respect to the frame (104) along the frame central axis (106) such that a thrust angle between a wheel axle (114) and the frame central axis (114) is adjusted. In the locked state (124), the leaf spring suspension (110) is longitudinally fixed in position.

## Description

### TECHNICAL FIELD

The disclosure relates generally to axle adjustment of vehicles. In particular aspects, the disclosure relates to an axle alignment arrangement for a vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Wheel axle alignment is crucial for obtaining efficient and safe operation of a vehicle. Accurate wheel axle alignment improves fuel efficiency, ensures driver's safety and increase durability of the vehicle. Wheel axle alignment is carefully performed during the assembly of vehicles. The alignment can, however, be time consuming and may involve addition or removal of adjustment elements such as washers and bushings. The alignment may even need replacement of suspension systems to adjust for larger misalignments.

The wheel axle alignment may further change over time as the vehicle is operated. Driving behavior, tire wear, road conditions, collisions or accidents may, for example, affect the alignment of the wheel axles, causing increased vibrations, pulling of the vehicle, an overall larger vehicle footprint and increased tire wear. There is therefore a need for efficient axle alignment procedures that can be made during vehicle assembly and/or at service or vehicle inspection. There is further a need to improve the range over which the alignment can be adjusted. Less complex and more efficient solutions for alignment are desired to reduce costs and the need to exchange of vehicle parts.

### SUMMARY

According to a first aspect of the disclosure, an axle alignment arrangement for a vehicle having a frame with a frame central axis, the axle alignment arrangement being configured to connect to a leaf spring suspension at an eyelet at a peripheral end of the leaf spring suspension, the leaf spring suspension further being configured to be connected to a wheel axle of the vehicle, the axle alignment arrangement comprising: a locking mechanism arranged to be placed in the eyelet of the leaf spring suspension for preventing movement of the leaf spring suspension along the frame central axis, wherein the locking mechanism is configured to be in a locked or an unlocked state; a frame connector configured to be fixed to the frame, the frame connector having a slot hole longitudinally elongated along the frame central axis, the slot hole configured to receive the locking mechanism; and wherein, in the unlocked state, the leaf spring suspension is movable longitudinally with respect to the frame along the frame central axis such that a thrust angle between the wheel axle and the frame central axis is adjusted; and wherein, in the locked state, the leaf spring suspension is longitudinally fixed in position relative to the frame.

The first aspect of the disclosure may seek to provide an improved axle alignment arrangement. A technical benefit may include an alignment of the wheel axle with reduced need of exchanging any parts of the vehicle. A less complex alignment procedure may further be provided. The axle alignment arrangement may allow for an extended adjustment span for the wheel axle alignment.

The wordings longitudinal or longitudinally may be construed as being along a direction parallel to the frame central axis. A leaf spring suspension may be construed as a suspension element. The leaf spring suspension may be formed by layers of materials. The layer of materials may be of varying sizes sandwiched one upon the other. The layers of material may be of steel. The leaf spring suspension may be formed as having an elliptical shape through the use of spring steel. The leaf spring suspension may be configured to flex as pressure is added to it but returning to its original position through a damping process. Standard leaf spring suspensions of today may further be used without modification in the axle alignment arrangement. The axle alignment may be construed as a wheel axle alignment.

The frame connector may be fixed to the frame. The frame connector may alternatively, be an integral part of the frame. A portion of the frame may thereby constitute the frame connector. The frame connector and locking mechanism may be provided as spare parts or as a kit. The frame connector may be retrofitted to a frame of an existing vehicle. The wording frame connector may also be referred to as a chassis connector. The chassis connector is configured to be attached to a cassis of the vehicle.

The thrust angle may be construed as an angle spanning between a thrust axis, being an imaginary axis perpendicular to the wheel axle. The imaginary thrust axis may also be referred to as a thrust line. The thrust angle may be construed as spanning between the thrust axis and the frame central axis. The wheel axle may, in some examples, be understood as a central wheel axis spanning between two opposite end portions of the wheel axle, the end portions each being configured to receive a wheel. The axle alignment arrangement may be construes as a wheel axle arrangement.

Put differently, the thrust angle may be understood as the degree angle the thrust axis is off to the frame central axis. The frame central axis may be construed as spanning between a front axle and rear axle of the vehicle. In other words, the frame central axis may be construed as the vehicles geometric center line. The wheel axle may be a rear wheel axle of the vehicle. The wheel axle may be a front axle of the vehicle.

In some examples, each of the locking mechanism and the frame connector comprises a toothed segment, and wherein the toothed segment of the locking mechanism is configured to engage the toothed segment of the frame connector.

A technical benefit may include a more precise positioning of the locking mechanism and the frame connecter in relation to each other. In the unlocked state a better controlled longitudinal movement of the leaf spring suspension may be achieved. In the locked state, an improved longitudinal positional fixation of the leaf spring suspension relative to the frame may be achieved. The leaf spring suspension may be locked relative to the frame.

In some examples, the locking mechanism comprises a bolt, the bolt extending along a bolt axis. A technical benefit may include a less complex locking mechanism. The eyelet of the leaf spring suspension may further receive the bolt allowing for a compact and less complex locking mechanism. The bolt allows for a quick transition from the locked to the unlocked state. The wording eyelet may be construed as an element having a through hole configured to receive the locking mechanism.

In some examples, the bolt comprises a toothed segment, the toothed segment comprising radially protruding elements, and wherein the slot hole of the frame connector comprises a rack having transversally elongated elements for receiving the radially protruding elements of the bolt, such that in the unlocked state, a rotation of the bolt around the bolt axis shifts the position of the bolt longitudinally along the frame central axis such that the leaf spring suspension is shifted longitudinally relative to the frame connector. A technical benefit may include that a rotational motion of the bolt is efficiently converted into a linear longitudinal motion along the rack. A compact and reliable arrangement for shifting the leaf spring suspension longitudinally relative to the frame connector may thereby be achieved. The wording rack may be construed as an element having teeth on at least one side face configured for receiving a complementary teethed element such as a cogged element or a cogged wheel. The rack may be configured to allow for a rotation of the teethed element to transform into linear motion along the rack or vice versa. The rack may be press fitted or formed in the material of the frame connector.

In some examples, the toothed segment of the bolt extends partly around the circumference of the bolt and a reminder of the circumference comprises a smooth segment. A technical benefit may include that the smooth segment allows for an improved abutment and fixation of the bolt against the frame connector. The toothed segment may be an integral part of the bolt. The toothed segment may alternatively be a separate part attachable to the bolt. The separate part may be a cylinder configured to radially enclose a portion of the bolt and to be fixed to the bolt.

In some examples, the frame connector comprises an additional slot hole arranged centrally aligned with the slot hole, wherein the eyelet of the leaf spring suspension is configured to be arranged between the slot hole and the additional slot hole, and wherein the additional slot hole is configured to receive the bolt. A technical benefit may include providing improved support for the bolt. The leaf spring suspension may further be efficiently held in place. The additional slot hole may be longitudinally extended along for a longitudinal shift of the bolt inside the additional slot. The additional slot hole may be a through hole.

In some examples the locking mechanism further comprises a locking ring configured to radially enclose the bolt, the locking ring comprising a toothed segment having radially protruding elements, and wherein the additional slot hole further comprises a rack having a toothed segment, the toothed segment having transversally elongated elements for receiving the radially protruding elements of the locking ring such that the toothed segment of the locking ring engages with the toothed segment of the additional slot hole. A technical benefit may include that a rotational motion of the bolt is efficiently converted, via the locking ring, into a linear longitudinal motion of the bolt along the rack inside the additional slot hole. A compact and reliable arrangement for shifting the leaf spring suspension longitudinally relative to the frame connector may thereby be achieved. The rack may be press fitted onto the additional slot hole. The rack may alternatively be formed in the material of the frame connector. The locking ring may be in the form of a ring. The locking ring may have cylindrical shape configured to radially enclose the bolt. The cylindrical shape may be extended along the bolt axis. The locking ring may be removable from the bolt. The locking ring may thereby be configured to allow for a rotational motion of the bolt relative to the inner circumference of the locking ring. The locking ring may alternatively be arranged to be fixed on the bolt.

In some examples, the toothed segment of the locking ring extends partly around the circumference of the locking ring a reminder of the circumference comprises a smooth segment. A technical benefit may be that the smooth segment of the locking ring allows for an improved abutment and fixation of the locking ring against the frame connector.

In some examples, wherein the bolt has a threaded portion and wherein the locking mechanism further comprises a threaded nut for, in the locked state, tightening the bolt and the leaf spring suspension to the frame connector such that the leaf spring suspension is fixed relative to the frame, and, in the unlocked state, for loosening the bolt and the leaf spring suspension relative from the frame connector such that the leaf spring suspension is movable longitudinally with respect to the frame along the frame central axis. A technical benefit may include that a robust and compact locking mechanism is achieved. The locking mechanism may further be efficiently changed back and forth between a locked and the unlocked state.

In some examples, the frame connector is in the form of a bracket configured to be mounted on the frame. A technical benefit may include that a compact and robust fixation to the frame can be achieved.

In some examples, the leaf spring suspension is longitudinally extending along the frame central axis. A technical benefit may include to allow for simple adjustment of the leaf spring suspension relative to the frame. Conventional leaf spring suspensions may therefore be used reducing the need for alternative parts or modifications.

In some examples, the eyelet of the leaf spring suspension comprises a bushing adapted to receive the bolt when mounted on the frame connector. A technical benefit may include an improved alignment. An improved suspension may further be achieved. Play between the locking mechanism and the leaf spring suspension may further be reduced.

The bushing may be a rubber bushing.

According to a second aspect of the disclosure a vehicle comprising the axle alignment arrangement is provided. The second aspect of the disclosure may seek to provide a vehicle for which the axle alignment is improved. The above-mentioned features of the axle alignment arrangement, when applicable, apply to this second aspect as well. In order to avoid undue repetition, reference is made to the above.

In some examples, the vehicle is a heavy-duty vehicle, a medium-duty vehicle or a bus. A technical benefit may include that vehicles carrying heavier loads may have improved alignment of the wheel axle. Vehicles have larger number of duty hours may be efficiently serviced. A safer vehicle may be provided.

In some examples, the vehicle may be a light-duty vehicle.

According to a third aspect of the disclosure a method for aligning a wheel axle relative to a frame central axis of a vehicle is provided. The method comprising: unlocking the locking mechanism such that the leaf spring suspension is longitudinally movable with respect to the frame along the frame central axis; adjusting the leaf spring suspension relative to the frame along the frame central axis such that a thrust angle between the wheel axle and the frame central axis is reduced; and locking the locking mechanism such that the leaf spring suspension is fixed longitudinally relative to the frame.

The third aspect of the disclosure may seek to provide an efficient method for aligning the wheel axle relative to the frame central axis of the vehicle. The above-mentioned features pertaining to the first and second aspects, when applicable, apply also to this third aspect. In order to avoid undue repetition, reference is made to the above.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples. The figures should not be considered limiting the inventive concept on to the specific examples. Instead they are used for explaining and understanding the inventive concept. As illustrated in the figures, the sizes of layers and regions may be exaggerated for illustrative purposes and, thus, are provided to illustrate the general structures of embodiments of the present invention. Like reference numerals refer to like elements throughout.
**FIG. 1** is an exemplary schematic view of a vehicle comprising an axle alignment arrangement according to one example.
**FIGs. 2a and 2b** are exemplary schematic views of an axle alignment arrangement attached to a vehicle having a frame according to one example.
**FIG. 3** is an exemplary schematic view of a portion of a vehicle.
**FIG. 4** is an exemplary schematic exploded view of an axle alignment arrangement according to one example.
**FIGs. 5a** and **5b** are exemplary schematic cross-sectional view of the axle alignment arrangement of **FIG. 4** in assembled states according to one example.
**FIG. 6** is a flow chart of an exemplary method for aligning a wheel axle relative to a frame central axis of a vehicle.
**FIGs. 7a and 7b** illustrates an axle alignment arrangement from two different viewing directions according to another example.
**FIG. 8** illustrates an axle alignment arrangement according to another example.

### DETAILED DESCRIPTION

Aspects set forth below represent the necessary information to enable those skilled in the art to practice the disclosure.

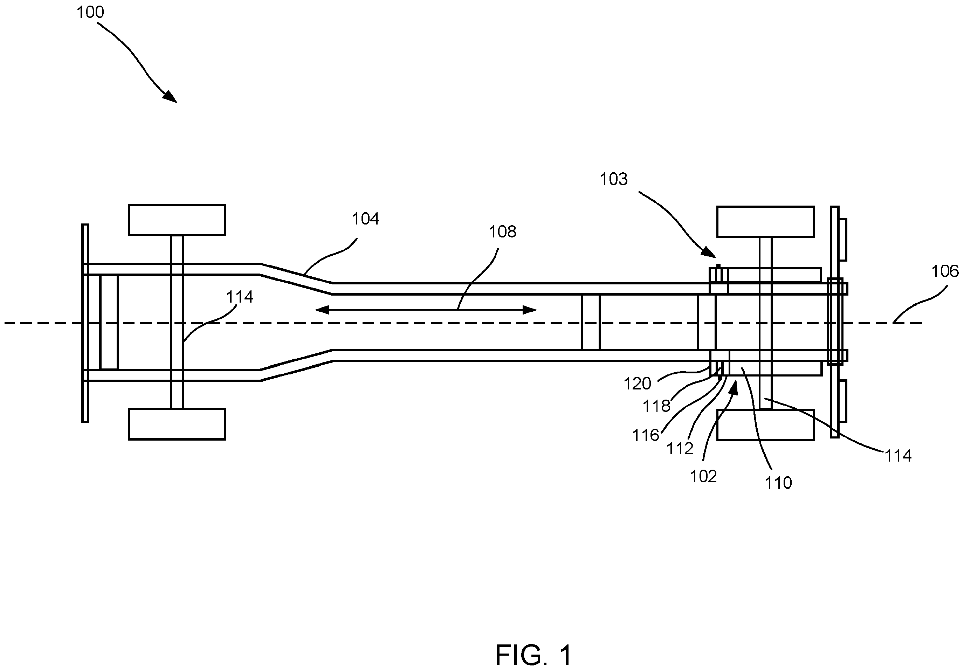

FIG. 1 is an exemplary schematic view of a vehicle 100 comprising an axle alignment arrangement 102 according to one example. The vehicle 100 may be a heavy-duty vehicle, a medium-duty vehicle or a bus.

The vehicle 100 has a frame 104 with a frame central axis 106. The frame central axis 106 spans along the vehicle 100 in a longitudinal direction 108. The longitudinal direction 108 is parallel to the frame central axis 106. The axle alignment arrangement 102 is configured to connect to a leaf spring suspension 110. The axle alignment arrangement 102 is connected to the leaf spring suspension 110 at a peripheral end 112 of the leaf spring suspension 110. The leaf spring suspension 110 is connected to a wheel axle 114 of the vehicle 100. The wording connected may be construed as physically connected. The leaf spring suspension 110 may, for example, be fixed to the wheel axle with a U-bolt. The axle alignment arrangement 102 has a locking mechanism 116 arranged to be placed in an eyelet 118 of the leaf spring suspension 110. The eyelet 118 being at the peripheral end 112 of the leaf spring suspension 110. The locking mechanism 116 may thereby prevent a movement of the leaf spring suspension 110 along the frame central axis 106. A movement of the leaf spring suspension 110 in the horizontal direction 108 may thereby be prevented.

The axle alignment arrangement 102 further comprises a frame connector 120. The frame connector 120 is configured to be fixed to the frame 104. The axle alignment arrangement 102 may thereby connect the wheel axle 114 to the frame 104 of the vehicle 100. The vehicle 100 may comprise an additional axle alignment arrangement 103.

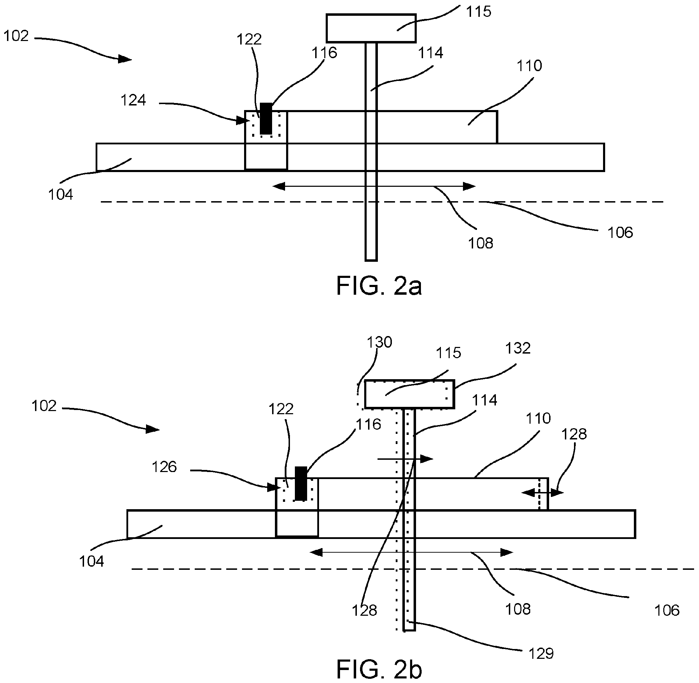

FIGs. 2a and 2b are exemplary schematic views of an axle alignment arrangement 102 attached to a vehicle having a frame 104 according to one example. The axle alignment arrangement 102 having a frame connector 120. The frame connector 120 has a slot hole 122 longitudinally elongated along the frame central axis 106. The slot hole 122 is configured to receive the locking mechanism 116. The locking mechanism 116 is configured to be in a locked state 124 and an unlocked state 126.

For further reference compare FIGs 2a and 2b. FIG 2a illustrates the locking mechanism 102 in the locked state 124. In the locked state 124, the leaf spring suspension 110 is longitudinally fixed in position relative to the frame 104. The wheel axle 114 may thereby be fixed in position relative to the frame 104. The wheel axle 114 is configured to receive at least one wheel 115. The locking mechanism 116 is in a fixed position relative to the frame 104. The wording fixed in position should here be construed as secured in position or attached as to be immovable in the longitudinal direction 108 relative to the frame 104.

In FIG 2b the locking mechanism 116 is in the unlocked state 126. In the unlocked state 126, the leaf spring suspension 110 is, in contrast to the locked state 124, movable 128 longitudinally with respect to the frame 104 along the frame central axis 106. The looking mechanism 116 may be movable in the longitudinal direction 108. The wheel axle 114 may thereby be moved 128 in position relative to the frame 104. The wheel axle 114 may therefore be understood as moved from a first position 130 to a second position 132. In FIG 2b the movement of the leaf spring suspension is schematically illustrated to move the wheel axle 114 longitudinally, in parallel to the frame central axis 106.

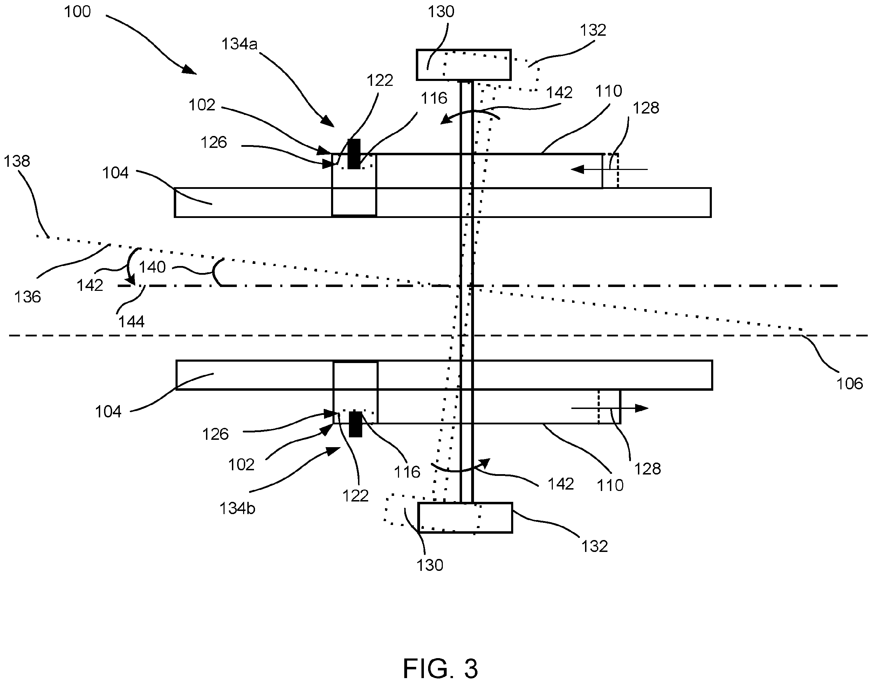

In another example, the wheel axle may rotate relative to the frame central axis 106 during the movement of the leaf spring suspension 110. An angle may thereby be changed between the wheel axle 114 and the frame central axis 116. This may, in one example, be a result from that a distal end 129 of the wheel axle 114, the distal end 129 being at a distance from the axle alignment arrangement 102, may be longitudinally fixed in position relative to the frame 104. According another example, the distal end 129 may move in longitudinal direction 108 opposite to the movement 128 of the leaf spring suspension 110. Further examples will be discussed in relation to FIG 3.

FIG 3 is an exemplary schematic view of a portion of a vehicle 100. The vehicle 100 may comprise a pair 134a, 134b of axle alignment arrangements 102 according to one example. The axle alignment arrangements 102 may be any one of the axle alignment arrangements 102 as described above. A vehicle 100 having a pair of axle alignment arrangements 134a, 134b may allow for an improved alignment of the wheel axle 114 to the frame central axis 106. According to one example, the axle alignment may be performed by adjusting one or two of the axle alignment arrangements 102 of the pair 134a, 134b. As exemplified in FIG 3, the wheel axle 114 may, in a state before the aligning, be in off direction 136. The off-direction may be referred to as a miss-alignment direction. The off-direction 136 may be described by a thrust line 138. The thrust line 138 may be construed as an imaginary line being perpendicular to the wheel axle 114. The thrust line 138 may be understood as a line that compares the direction at which of the wheel axle 114 is aimed in relation to the frame central axis 106 of the vehicle 100. The thrust line 138 being perpendicular to the wheel axle 114. A thrust angle 140 may further be understood to describe a degree of alignment of the wheel axle 114 to the frame central axis 106. The thrust angle 140 may be understood to span an angle between the thrust line of the wheel axle 114 and the frame central axis 106. Put differently, the thrust angle 140 may be defined to describe the degree of alignment between the thrust line 138 of the wheel axle 114 to the frame central axis 106. The thrust angle 140 may be indicative of the angle the wheel axle 114 is off to the frame central axis 106. Put differently, in a misaligned state, the thrust line 138 as drawn perpendicular to and straight forward from a center of wheel axle 114, may be non-parallel with the front central axis 106.

FIG 3 further illustrates an alignment of the wheel axle 114. In more detail, the axle alignment arrangement 102, 134a, of the pair 134a, 134b, may be in the unlocked state 126 such that the corresponding leaf spring suspension 110 is, movable 128 longitudinally with respect to the frame 104 along the frame central axis 106. The wheel axle 114 may thereby be moved 128 in position relative to the frame 104. In addition, the other axle alignment arrangement 110, 134b of the pair 134a, 134b, may also be in unlocked state 126 such that the corresponding leaf spring suspension 110 is movable 128 longitudinally with respect to the frame 104 along the frame central axis 106. The unlocking of the axle alignment arrangements 134a and 134b may be sequential. The movement 128 of the leaf spring suspension 110 of the axle alignment arrangement 102, 134b may be opposite in longitudinal direction to the movement 128 of the leaf spring suspension 110 corresponding to the axle alignment arrangement 110, 134a. The wheel axle 114 may thereby be rotated 142 such that the thrust angle 140 is reduced. The thrust line 138 may thereby be realigned 144 to be directed in parallel with the frame central axis 106. The angle between the wheel axle 114 and the frame central axis 106 is thereby adjusted.

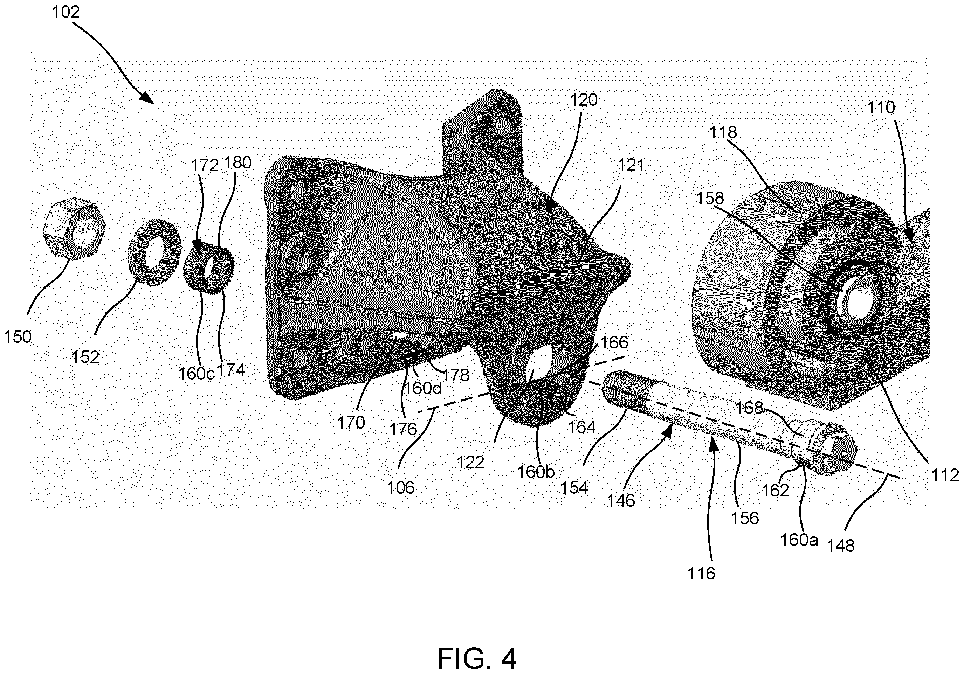

FIG 4 is an exemplary schematic exploded view of an axle alignment arrangement 102 according to one example. The axle alignment arrangement 102 is configured to connect to a leaf spring suspension 110 at a peripheral end 112 of the leaf spring suspension 110.

The axle alignment arrangement 102 has a locking mechanism 116 arranged to be placed in an eyelet 118 of the leaf spring suspension 110. The locking mechanism 116 may thereby prevent, when the axle alignment arrangement 110 is assembled, a movement of the leaf spring suspension 110 along the frame central axis 106. The axle alignment arrangement 102 further comprises a frame connector 120.

The frame connector 120 is configured to be fixed to a frame. The frame connector 120 may be in the form of a bracket 121 configured to be mounted on the frame. The leaf spring suspension 110 may be longitudinally extending along the frame central axis 106. The frame connector 120 has a slot hole 122 longitudinally elongated along the frame central axis 106. The slot hole 122 is configured to receive the locking mechanism 116. According to one example, the locking mechanism 116 may comprise a bolt 146. The bolt 146 is extending along a bolt axis 148.

The locking mechanism 116 may further comprise a threaded nut 150 configured to fix the bolt 146 relative to the frame connector 120. The locking mechanism 116 may further comprise a washer 152 to improve the fixation of the bolt 146 relative to the frame connector 120.

The bolt 146 may be in the form of a threaded fastener. The bolt 146 may have a threaded portion 154. The threaded portion 154 may comprise an external male thread. The threaded nut 150 may have a matching female thread. The bolt 146 may thereby act as an abutment for fixation of the leaf spring suspension 110 to the frame connector 120. The threaded portion 154 may extend over a portion of the bolt 146. The threaded portion 154 may radially enclose the bolt 146. The bolt 146 may further have a non-treaded portion 156. The non-treaded portion 156 may be referred to as a body of the bolt 146. The non-threaded portion 156 may radially enclose the bolt 146. The non-threaded portion 156 may be a substantially smooth surface. The non-threaded portion 156 allows for an improved abutment to the leaf spring suspension 110. The eyelet 118 of the leaf spring suspension may comprise a bushing 158 adapted to receive the bolt 146 when mounted on the frame connector 120.

The bushing 158 may be a rubber bushing.

According to one example, each of the locking mechanism 116 and the frame connector 120 may comprise a toothed segment 160a, 160b. The toothed segment 160a of the locking mechanism 116 is configured to engage the toothed segment 160b of the frame connector 120.

According to one example, the bolt 146 may comprise the toothed segment 160a, the toothed segment 160a comprising radially protruding elements 162. The slot hole 122 of the frame connector 120 may further comprise a rack 164 having transversally elongated elements 166 for receiving the radially protruding elements 162 of the bolt 146. This allows, in the unlocked state, for that a rotation of the bolt around the bolt axis shifts the position of the bolt longitudinally along the frame central axis such that the leaf spring suspension is shifted longitudinally relative to the frame connector.

The toothed segment 160a of the bolt 146 may extend partly around the circumference of the bolt 146 and a reminder of the circumference may comprise a smooth segment 168. The smoot segment 168 may be understood as a non-toothed segment.

The frame connector 120 may comprise an additional slot hole 170 arranged centrally aligned with the slot hole 122. The eyelet 118 of the leaf spring suspension 110 is configured to be arranged between the slot hole 122 and the additional slot hole 170. The additional slot hole 170 is further configured to receive the bolt 146.

The locking mechanism 116 may further comprises a locking ring 172 configured to radially enclose the bolt 146. The locking ring 172 may comprise a toothed segment 160c having radially protruding elements 174. The additional slot hole 170 may further comprise a rack 176. The rack 176 having a toothed segment 160d, the toothed segment having transversally elongated elements 178 for receiving the radially protruding elements 174 of the locking ring 172. This arrangement allows the toothed segment 160c of the locking ring 172 to engage with the toothed segment 160d of the additional slot hole 170. The toothed segment 160c of the locking ring may extend partly around the circumference of the locking ring 172. A reminder of the circumference of the locking ring 172 may comprise a smooth segment 180.

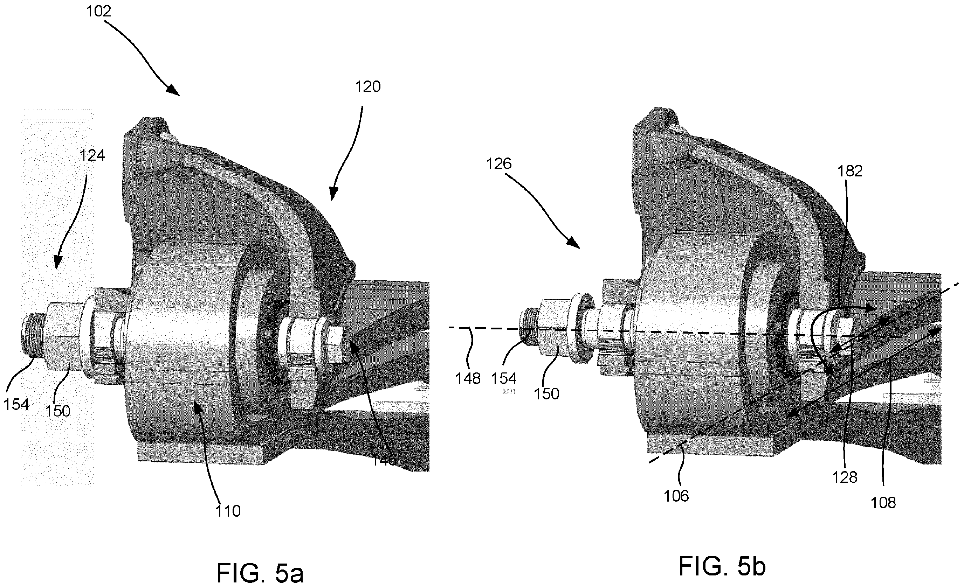

FIG 5a and 5b are exemplary schematic cross-sectional view of the axle alignment arrangement 102 of FIG 4 in assembled states according to one example. FIG 5a illustrates the axle alignment arrangement 102 in a locked state 124. FIG 5b illustrates the axle alignment arrangement 102 in an unlocked state 126. The threaded portion 154 of the bolt 146 is engaged with the threaded nut 150. The bolt 146 and the threaded nut 150 may be tightened relative to each other, in the locked state 124, such that the bolt 146 and the leaf spring suspension 110 are tightened to the frame connector 120. The leaf spring suspension 110 may thereby be fixed relative to the frame (not shown). The leaf spring suspension 110 is further fixed relative to the frame connector 120.

In the unlocked state, see FIG 5b, the bolt 146 and threaded nut 150 are untightened relative to each other, thereby loosening the bolt 146 and the leaf spring suspension 110 relative from the frame connector 120. The leaf spring suspension 110 is thereby movable 128 longitudinally with respect to the frame along the frame central axis 106. Thus, in the unlocked state, a rotation 182 of the bolt 146 around the bolt axis 148 shifts 128 the position of the bolt 146 longitudinally along the frame central axis 106 such that the leaf spring suspension 110 may be shifted 128 longitudinally 108 relative to the frame connector 120.

It should be noted that the shift may be in a forward or backward direction of vehicle. In other words, a clockwise rotation of the bolt may shift the leaf spring suspension in on one longitudinal direction. An anti-clockwise rotation may shift the leaf spring suspension in an opposite longitudinal direction. A positive or negative thrust angle may thereby be reduced in magnitude. The wordings positive and negative thrust angle may be understood as angles pertaining to misalignments to a right or a left side of the frame central axis when viewing along the frame central axis.

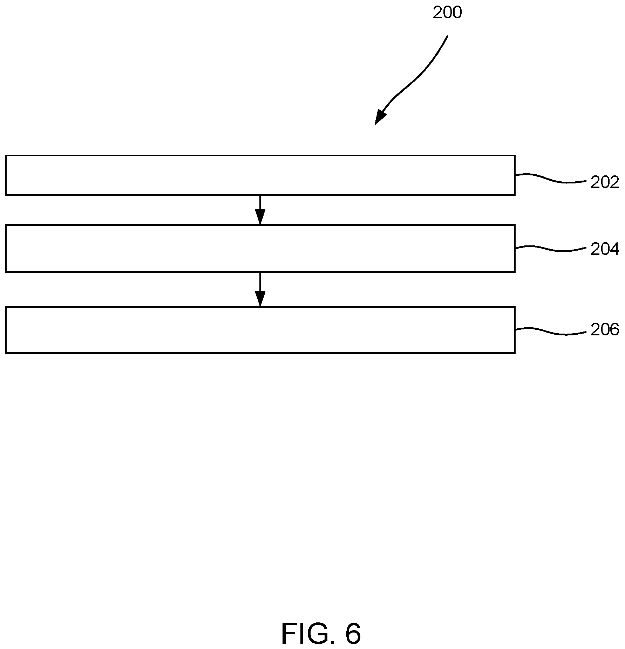

FIG 6 illustrates schematically a method 200 for aligning a wheel axle relative to a frame central axis of a vehicle 100. The vehicle 100 may be a vehicle as illustrated in Figure 3. The vehicle 100 comprising an axle alignment arrangement 102 as described above. The method 200 comprising unlocking 202 the locking mechanism 116 such that the leaf spring suspension 110 is longitudinally movable 128 with respect to the frame 104 along the frame central axis 106. The method 200 further comprises adjusting 204 the leaf spring suspension 110 relative to the frame 104 along the frame central axis 106 such that a thrust angle 140 between the wheel axle 114 and the frame central axis 106 may be reduced; and locking 206 the locking mechanism 116 such that the leaf spring suspension 110 is fixed longitudinally relative to the frame 104.

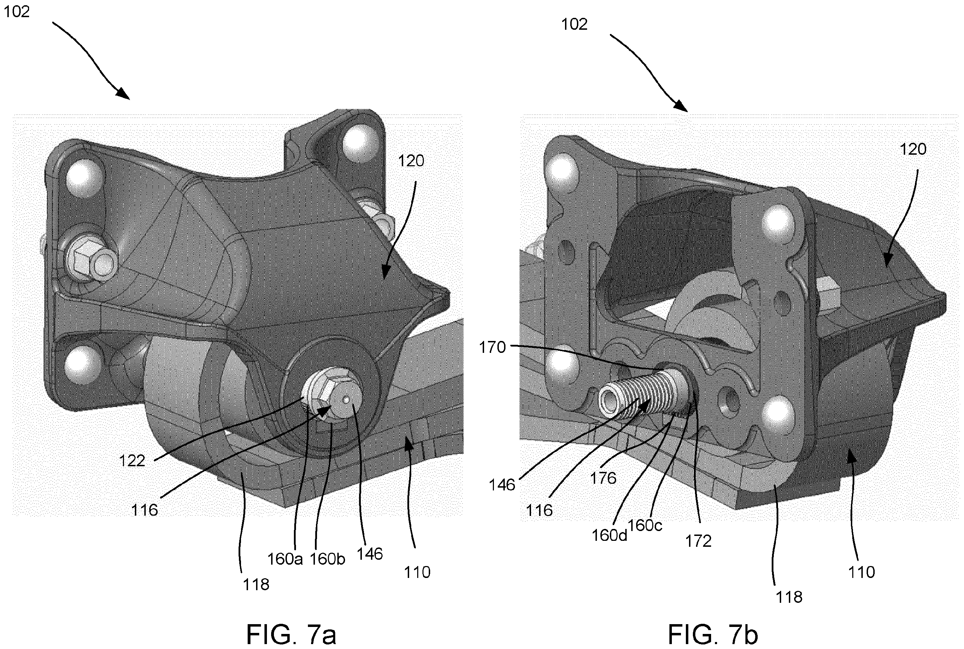

FIGs. 7a and 7b illustrates an axle alignment arrangement 102 from two different viewing directions according to another example. In FIGs. 7a and 7b the axle alignment arrangement 102 is in an assembled state. The axle alignment arrangement 102 is configured to connect to a leaf spring suspension 110 at a peripheral end 112 of the leaf spring suspension 110.

The axle alignment arrangement 102 has a locking mechanism 116 arranged to be placed in an eyelet 118 of the leaf spring suspension 110. The locking mechanism 116 may thereby prevent, when the axle alignment arrangement 110 is assembled, a movement of the leaf spring suspension 110 along a frame central axis (not shown). The axle alignment arrangement 102 further comprising a frame connector 120. The frame connector 120 is configured to be fixed to frame of a vehicle. The frame connector 120 has a slot hole 122 longitudinally elongated along the frame central axis. The slot hole 122 is configured to receive the locking mechanism 116. According to one example, the locking mechanism 116 may comprise a bolt 146.

With reference to FIG 7a, according to one example, each of the locking mechanism 116 and the frame connector 120 may comprise a toothed segment 160a, 160b. The toothed segment 160a of the locking mechanism 116 is configured to engage the toothed segment 160b of the frame connector 120. With reference to figure 7b, the frame connector 120 may comprise an additional slot hole 170 arranged centrally aligned with the slot hole 122. The eyelet 118 of the leaf spring suspension 110 is configured to be arranged between the slot hole 122 and the additional slot hole 170. The additional slot hole 170 is further configured to receive the bolt 146. The locking mechanism 116 may further comprises a locking ring 172 configured to radially enclose the bolt 146. The locking ring 172 may comprise a toothed segment 160c. The additional slot hole 170 may further comprise a rack 176. The rack 176 having a toothed segment 160d.

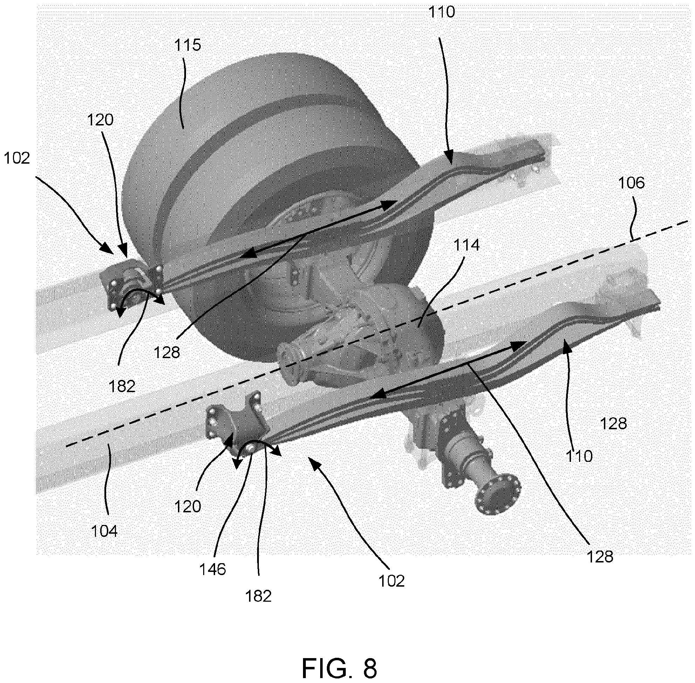

FIG. 8 illustrates an axle alignment arrangement 102 according to another example. FIG. 8 is an exemplary schematic view of a pair of the axle alignment arrangements 102. Each axle alignment arrangement 102 may be fixed, via the frame connector 120, to a frame 104 of a vehicle. The axle alignment arrangement 102 being configured to connect to the leaf spring suspension 110 in a peripheral end 112 of the leaf spring suspension 110. The leaf spring suspension 110 further being configured to be connected to a wheel axle 114 of the vehicle. The wheel axle 114 being configured to receive a wheel 115.The wheel axle 114 may be configured to receive wheels at opposing ends of the wheel axle 114. The axle alignment arrangement 102 further comprising: a locking mechanism 116 arranged to be placed in the eyelet 118 of the leaf spring suspension 110 for preventing movement of the leaf spring suspension 110 along the frame central axis 106. The axle alignment arrangement 102 further comprising a frame connector 120 configured to be fixed to the frame 104. The frame connector 120 having a slot hole longitudinally elongated along the frame central axis 106, the slot hole 120 configured to receive the locking mechanism 116; and wherein, in the unlocked state, the leaf spring suspension 110 is movable 128 longitudinally with respect to the frame 104 along the frame central axis 106.

The locking arrangement 116 may comprise a bolt 146 as described above. With regard to FIG8, it may be noted that in such a case, a rotation 182, in the unlocked state 126, of the bolt 146 around the bolt axis (not shown) may shift the position of the bolt 146 and the position of leaf spring suspension 110 longitudinally along the frame central axis 106. It should be noted that the shift 128 may be in a forward or a backward direction relative to the wheel axle. In one example, a clockwise rotation may shift the leaf spring suspension in a longitudinal direction. An anti-clockwise rotation may shift the leaf spring suspension in an opposite longitudinal direction.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An axle alignment arrangement (102) for a vehicle (100) having a frame (104) with a frame central axis (106), the axle alignment arrangement (102) being configured to connect to a leaf spring suspension (110) at an eyelet (118) at a peripheral end (112) of the leaf spring suspension (110), the leaf spring suspension (110) further being configured to be connected to a wheel axle (114) of the vehicle (100), the axle alignment arrangement (102) comprising:
a locking mechanism (116) arranged to be placed in the eyelet (118) of the leaf spring suspension (102) for preventing movement (128) of the leaf spring suspension (110) along the frame central axis (106), wherein the locking mechanism (116) is configured to be in a locked (124) or an unlocked state (126);
a frame connector (120) configured to be fixed to the frame (104), the frame connector (120) having a slot hole (122) longitudinally elongated along the frame central axis (106), the slot hole (122) configured to receive the locking mechanism (116); and
wherein, in the unlocked state (126), the leaf spring suspension (110) is movable (128) longitudinally with respect to the frame (104) along the frame central axis (106) such that a thrust angle (140) between the wheel axle (114) and the frame central axis (106) is adjusted; and
wherein, in the locked state (124), the leaf spring suspension (110) is longitudinally fixed in position relative to the frame (104).

2. The axle alignment arrangement according to claim 1, wherein each of the locking mechanism (116) and the frame connector (120) comprises a toothed segment (160a, 160b), and wherein the toothed segment (160a) of the locking mechanism (116) is configured to engage the toothed segment (160b) of the frame connector (120).

3. The axle alignment arrangement according to claim 1 or 2, wherein the locking mechanism (116) comprises a bolt (146), the bolt (146) extending along a bolt axis (148).

4. The axle alignment arrangement according to claim 3, wherein the bolt (146) comprises a toothed segment (160a), the toothed segment (160a) comprising radially protruding elements (162), and wherein the slot hole (122) of the frame connector (120) comprises a rack (164) having transversally elongated elements (166) for receiving the radially protruding elements (162) of the bolt (146), such that in the unlocked state (126), a rotation of the bolt (146) around the bolt axis (148) shifts the position of the bolt (146) longitudinally along the frame central axis (106) such that the leaf spring suspension (110) is shifted longitudinally relative to the frame connector (120).

5. The axle alignment arrangement according to claim 4, wherein the toothed segment (160a) of the bolt (146) extends partly around the circumference of the bolt (146) and a reminder of the circumference comprises a smooth segment (168).

6. The axle alignment arrangement according to anyone of claims 1 to 5, wherein the frame connector (120) comprises an additional slot hole (170) arranged centrally aligned with the slot hole (122), wherein the eyelet (118) of the leaf spring suspension (110) is configured to be arranged between the slot hole (122) and the additional slot hole (170), and wherein the additional slot hole (170) is configured to receive the bolt (146).

7. The axle alignment arrangement according claim 6, wherein the locking mechanism (116) further comprises a locking ring (172) configured to radially enclose the bolt (146), the locking ring (172) comprising a toothed segment (160c) having radially protruding elements (174), and wherein the additional slot hole (170) further comprises a rack (176) having a toothed segment (160d), the toothed segment (160d) having transversally elongated elements (178) for receiving the radially protruding elements (174) of the locking ring (172) such that the toothed segment(160c) of the locking ring (172) engages with the toothed segment (160d) of the additional slot hole (170).

8. The axle alignment arrangement according to claim 7, wherein the toothed segment (160c) of the locking ring (172) extends partly around the circumference of the locking ring (172) a reminder of the circumference comprises a smooth segment (180).

9. The axle alignment arrangement according to any one of claims 3 to 8, wherein the bolt (146) has a threaded portion (154) and wherein the locking mechanism (116) further comprises a threaded nut (150) for, in the locked state (124), tightening the bolt (146) and the leaf spring suspension (110) to the frame connector (120) such that the leaf spring suspension (110) is fixed relative to the frame (104), and, in the unlocked state (126), for loosening the bolt (146) and the leaf spring suspension (110) relative from the frame connector (120) such that the leaf spring suspension (110) is movable longitudinally with respect to the frame (104) along the frame central axis (106).

10. The axle alignment arrangement according to any one of claims 1 to 9, wherein the frame connector (120) is in the form of a bracket (121) configured to be mounted on the frame (104).

11. The axle alignment arrangement according to any one of claims 1 to 10, wherein the leaf spring suspension (110) is longitudinally extending along the frame central axis (106).

12. The axle alignment arrangement according to any one of claim 3 to 11, wherein the eyelet (118) of the leaf spring suspension (110) comprises a bushing (158) adapted to receive the bolt (146) when mounted on the frame connector (120).

13. A vehicle comprising the axle alignment arrangement according to anyone of the preceding claims 1 to 12.

14. The vehicle according to claim 13, wherein the vehicle is a heavy-duty vehicle, a medium-duty vehicle or a bus.

15. A method for aligning a wheel axle relative to a frame central axis of a vehicle, the vehicle comprising an axle alignment arrangement of claim 1, the method (200) comprising:
unlocking (202) the locking mechanism (116) such that the leaf spring suspension (110) is longitudinally movable with respect to the frame (104) along the frame central axis (106);
adjusting (204) the leaf spring suspension relative to the frame (104) along the frame central axis (106) such that a thrust angle (140) between the wheel axle (114) and the frame central axis (106) is reduced; and
locking (206) the locking mechanism (116) such that the leaf spring suspension (110) is fixed longitudinally relative to the frame (104).
